# EUROPEAN PATENT APPLICATION

(11) **EP 4 539 224 A1**
(43) Date of publication of application: **16.04.2025**
(21) Application number: 24166834.2
(22) Date of filing: 27.03.2024
(51) Int. Cl.: H01M 50/209, H01M 50/242, B60K 1/04

(54) **BEAM STRUCTURE, BATTERY BOX, AND BATTERY PACK**

(30) Priority: 13.10.2023 CN 202311332658
(71) Applicant: Eve Energy Co., Ltd., Huizhou, Guangdong 516006 (CN)
(72) Inventor: ZHOU, Hongquan, No.38,Huifeng 7th Road? Zhongkai High-tech Zooe,Huizhou (CN)
(74) Representative: Herrero & Asociados, S.L.

(57) **Abstract**

A beam structure (400), a battery box (100), and a battery pack are disclosed. The beam structure (400) includes an inner plate (411) and an outer plate (412) arranged oppositely to the inner plate (411). A first cavity is defined between the inner plate (411) and the outer plate (412), the inner plate (411) is configured to be arranged at a side facing the battery cell (3). At least part of the inner plate (411) is configured with a corrugated structure (40).

## Description

### TECHNICAL FIELD

The present disclosure relates to the field of batteries, for example, to a beam structure, a battery box, and a battery pack.

### BACKGROUND

A battery pack includes a battery box and a battery cell arranged in the battery box. The battery box usually includes a box body having a beam structure. In the related art, a volume of the battery cell may be cyclically expanded in charging and discharging processes, which requires a deformation gap to be reserved between the battery cell and the beam structure of the box body. However, on the one hand, reserving the deformation gap is not conducive to the stability of installation of the battery cell in the battery box, and on the other hand, the volume of the battery box will be increased.

### SUMMARY

A beam structure for a battery box is disclosed, the battery box is configured to receive a battery cell, and the beam structure comprises: an inner plate; and an outer plate, arranged oppositely to the inner plate. A first cavity is defined between the inner plate and the outer plate, the inner plate is configured to be arranged at a side facing the battery cell. at least part of the inner plate is configured with a corrugated structure.

A battery box configured to receive a battery cell, comprising a box body. The box body comprises the beam structure as previously described. The battery box further comprises a top cover, arranged at an upper side of the box body.

A battery pack comprises a battery cell and the battery box as previously described.

### BRIEF DESCRIPTION OF THE DRAWINGS

In order to more clearly illustrate the technical solution of some embodiments of the present disclosure, drawings that need to be used in some embodiments of the present disclosure will be briefly introduced below. It should be understood that the accompanying drawings only show some embodiments of the present disclosure and therefore should not be regarded as limiting the scope of the present disclosure. For those skilled in the art, other relevant drawings may also be obtained according to these drawings without any creative labor.
FIG. 1 is a schematic top view of a battery pack according to some embodiments of the present disclosure.
FIG. 2 is a schematic exploded view of the battery pack according to some embodiments of the present disclosure.
FIG. 3 is a schematic cross-section view of a beam structure along a length direction of the beam structure according to some embodiments of the present disclosure.
FIG. 4 is a schematic cross-section view of a beam structure along the length direction of the beam structure according to some embodiments of the present disclosure.
FIG. 5 is a schematic cross-section view of a crossbeam along a length direction of the crossbeam according to some embodiments of the present disclosure.
FIG. 6 is a schematic cross-section view of a beam structure along a length direction of the beam structure according to some embodiments of the present disclosure.

In the drawings:
100, battery box; 1, top cover; 2, busbar assembly; 3, battery cell; 4, box body; 4a, side beam; 400, beam structure; 40, corrugated structure; 401, corrugated groove; 402, compression section; 403, deformation section; 41, support section; 411, inner plate; 412, outer plate; 413, first support plate; 414, second support plate; 415, third support plate; 416, connecting plate; 410a, step; 42, hoisting portion; 420, longitudinal-plate section; 421, first connecting section; 422, second connecting section; 423, second longitudinal-plate section; 424, first longitudinal-plate section; 4241, longitudinal section; 4242, oblique section; 425, reinforcing rib; 426, groove structure; 5, liquid-cooling plate; 51, water inlet and outlet; 6, bottom guard plate; 7, crossbeam; 71, side wall; I, first cavity; II, second cavity.

### DETAILED DESCRIPTION

In the description of the present disclosure, it should be noted that, orientations or positional relationships indicated by terms "up", down", "front", "rear", "left", "right", "vertical", "horizontal", "top ", "bottom", "inside", "outside", etc., are based on the orientations or positional relationships shown in the accompanying drawings, and are merely for convenience of describing the present disclosure and simplifying the description, rather than implying or indicating that the device or the component referred to must have a particular orientation or constructed and operated in a particular orientation, and thus these terms cannot be understood as limiting the present disclosure.

Unless otherwise defined, technical and scientific terms used herein have the same meanings as generally understood by those skilled in the art of the present disclosure. The terms used in the description of the present disclosure are for the purpose of describing specific embodiments only and are not intended to limit the present disclosure.

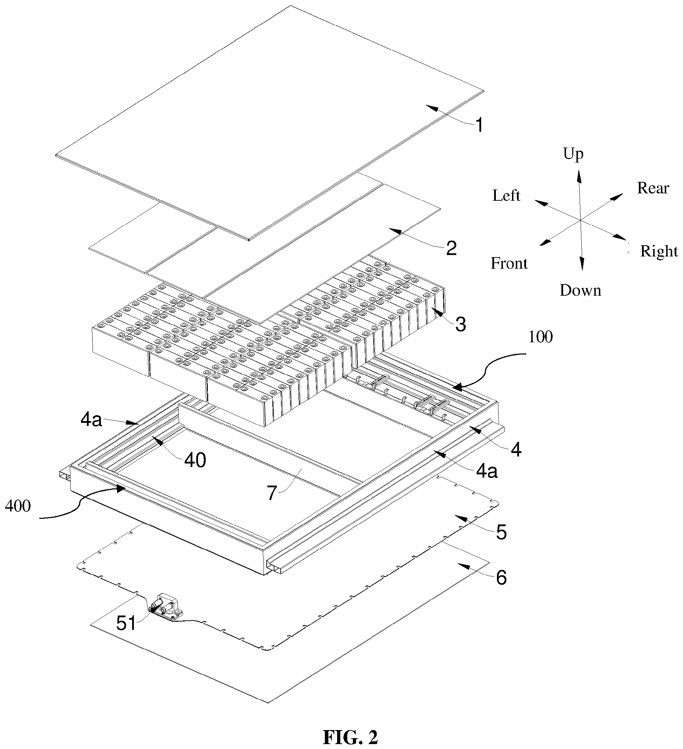

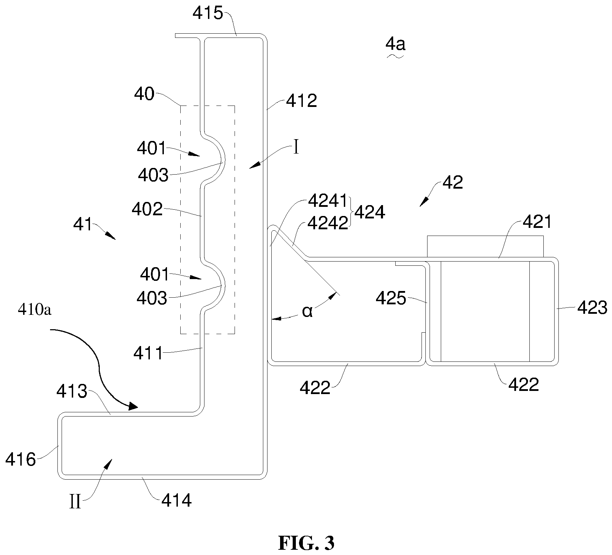

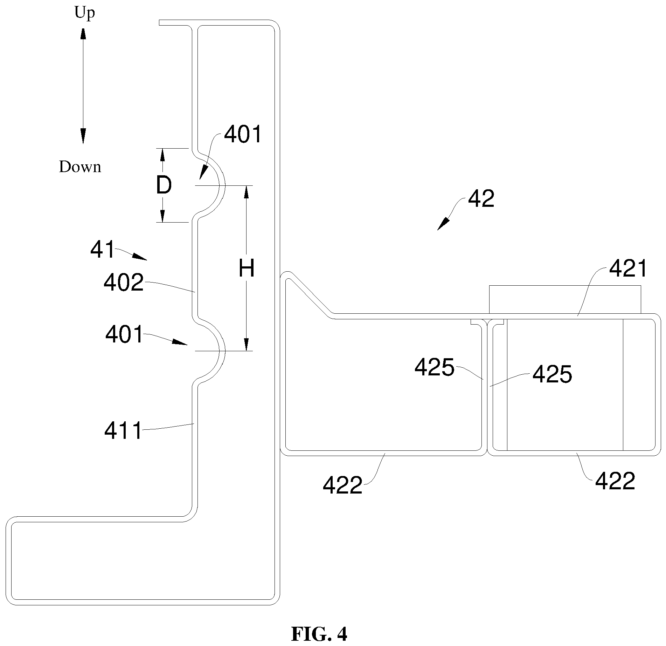

As shown in FIG. 3 and FIG. 4, a beam structure 400 is disclosed in some embodiments of the present disclosure. The beam structure 400 is applied to or used in a battery box 100, and for example, applied to a side beam 4a of the battery box 100. A battery cell 3 may be received or installed in the battery box 100. As shown in FIG. 2 and FIG. 3, a support portion 41 is disposed at a side of the beam structure 400 that is close to the battery cell 3. A hoisting portion 42 is disposed at a side of the support portion 41 that is away from the battery cell 3. The support portion 41 herein is configured to form or enclose a cavity configured to assemble or receive the battery cell 3. The hoisting portion 42 is configured to assemble or install the battery box 100 to an electrical device.

In the related art, the battery box mostly adopts aluminum extrusion profiles to form the beam structure that is included in the box body. The manufacturing process of the extrusion aluminum profiles is simple, but the material cost is higher. Besides, the battery box made of aluminum profiles has a low structural strength. In a case that the battery box is subjected to an external force, the beam structure of the box body is prone to be deformed plastically and squeeze a storage space of the battery cell in the battery box; and in an extreme case, it may even cause a thermal runaway of the battery cell. Based on this, the beam structure of some embodiments of the present disclosure is formed by a steel plate by means of roll forming, i.e., the beam structure of the some embodiments of the present disclosure is a roll-formed steel plate. The beam structure formed by the roll-formed steel plate has a high structural strength. Compared with the traditional aluminum profiles, the beam structure of some embodiments of the present disclosure may better resist deformation when being subjected to the external force, and the safety of the battery cell 3 in the battery box is ensured.

In some embodiments, the support portion 41 includes an inner plate 411 and an outer plate 412 arranged oppositely to each other. A first cavity I is defined between the inner plate 411 and the outer plate 412. The inner plate 411 is arranged at a side of the support portion 41 facing the battery cell 3. That is, the inner plate 411 is arranged towards or faces the battery cell 3. At least part of the inner plate 411 is configured with a corrugated structure 40. As shown in FIG. 3, the corrugated structure 40 configured on the inner plate 411 makes the inner plate 411 have a good elastic deformation ability when the inner plate 411 is subjected to an external force. When the volume of the battery cell 3 is cyclically expanded in the charging and discharging processes and the battery cell 3 acts on the inner plate 411, the corrugated structure 40 configured on the inner plate 411 may absorb the cyclic expansion deformation of the battery cell 3 through elastic deformation, such that the battery cell 3 may be arranged as close as possible to the inner plate 411, that is, the beam structure 400. On one hand, the stability of the assembly of the battery cell 3 in the battery box 100 may be improved; and on the other hand, the volume of the battery box 100 may be reduced.

In some embodiments, when the battery cell 3 is expanded, the corrugated structure 40 configured on the inner plate 411 is compressed and elastically deformed towards the outer plate 412, to absorb the expansion and deformation of the battery cell 3. When the expansion of the battery cell 3 disappears, the corrugated structure 40 configured on the inner plate 411 is reset, in order to support the battery cell 3, so as to ensure the structural stability of the assembly of the battery cell 3 in battery box 100. In some embodiments, the corrugated structure 40 configured on the inner plate 411 may maintain the structural stability of the assembly of the battery cell 3 in the battery box 100 along with the cyclic expansion of the battery cell 3, and the volume of the battery box 100 may be effectively reduced.

As shown in FIG. 3, the corrugated structure 40 has or defines one or more corrugated grooves 401. The one or more corrugated grooves 401 are recessed towards the outer plate 412. The one or more corrugated grooves 401 recessed towards the outer plate 412 may ensure that a contact area between the inner plate 411 and the battery cell 3 is sufficiently large. In some embodiments, regions at both sides of each of the one or more corrugated grooves 401 defined on the inner plate 411 may be in contact with the battery cell 3. The regions at both sides of each of the one or more corrugated grooves 401 defined on the inner plate 411 are planar structures. In this way, the contact area between the inner plate 411 and the battery cell 3 is sufficiently, such that the structural stability of the assembly of the battery cell 3 in the battery box 100 may be ensured. Besides, when the battery cell 3 is expanded and in contact with the inner plate 411, a pressure applied to the battery cell 3 after the planar structures are in contact with a side surface of the battery cell 3 is small, and the safety is high. Moreover, the one or more corrugated grooves 401 are recessed towards the outer plate 412, such that a space where a structure of the inner plate 411 defining the one or more corrugated grooves 401 is located in the first cavity I. The volume of the cavity defined in the battery box 100 and configured to assembly or receive the battery cell 3 may be ensured, such that the purpose of reducing a volume of the battery box 100 in case that the number of battery cells 3 keeps unchanged may be achieved.

Further, the number of the one or more corrugated grooves 401 is at least two, or the one or more corrugated grooves 401 have at least two corrugated grooves 401. The at least two corrugated grooves 401 are arranged at intervals or spaced apart from each other. In this way, the processing of the corrugated grooves 401 may be facilitated, for example, the continuous rolling of the steel plate may be facilitated. Besides, a region defined between adjacent two of the corrugated grooves 401 may be well elastically deformed when the battery cell 3 is expanded, in order to absorb the deformation of the battery cell 3.

In some embodiments, a region of the inner plate 411 where each of the at least two corrugated grooves 401 is located is defined as a deformation section 403. An interval region between adjacent two deformation sections 403 is defined as a compression section 402 or pressurized section. An arc transition is configured between the compression section 402 and each of the deformation sections 403. In the cyclic expansion process of the battery cell 3, the deformation section 403 may be elastically deformed, and the compression section 402 is subjected to direct extrusion from the battery cell 3. Under the action of the deformation section 403, the compression section 402, as a whole, moves towards the outer plate (during the expansion of the volume of the battery cell 3) or away from (during the recovery of the volume of the battery cell 3) the outer plate 412. The arc transition between the compression section 402 and each of the deformation sections 403 may reduce a stress at a junction between the compression section 402 and the each of the deformation sections 403, which ensures the structural strength of the inner plate 411, and reduces the tearing and damage to the junction between the compression section 402 and each of the deformation sections 403 of the corrugated structure 40 during the cyclic expansion of the battery cell 3.

In some embodiments, an extension direction of each of the one or more corrugated grooves 401 is parallel to a length direction of the beam structure 400.

In some embodiments, the inner plate 411 is parallel to the outer plate 412.

As shown in FIG. 4, a distance between adjacent two of the at least two corrugated grooves 401 is defined as H. The maximum width of each of the corrugated grooves 401 is defined as D, and 0.4≤D/H≤1.2. In this way, the layout of the corrugated grooves 401 and the compression section 402 is more reasonable, such that the corrugated structure 40 may be deformed within a reasonable range in the process that the battery cell 3 squeezes the inner plate 411, without affecting the structural strength of the inner plate 411. In other words, when 0.4≤D/H≤1.2, the corrugated structure 40 makes the inner plate 411 be able to produce elastic deformation without plastic deformation when the inner plate 411 is compressed. In this way, the safety of the beam structure 400 is ensured when the beam structure 400 absorbs the expansion and deformation of the battery cell 3.

In some embodiments, 20mm≤D≤60mm. In some embodiments, H = 50 mm. In some embodiments, D=20mm.

It should be noted that, the maximum width of each of the corrugated grooves 401 refers to the maximum straight-line distance between two points on the inner wall of the corresponding corrugated groove 401 in the up-down direction shown in FIG. 4.

As shown in FIG. 3, the beam structure 400 further includes a first support plate 413 and a second support plate 414. In some embodiments, the first support plate 413 is connected to the inner plate 411 and is extended from the inner plate 411 towards a side that deviates or is away from the outer plate 412. The second support plate 414 is connected to the outer plate 412. An extension direction of the second support plate 414 is the same as an extension direction of the first support plate 413. That is, the second support plate 414 is extended from the outer plate 412 in a direction towards or facing the battery cell 3. The first support plate 413 is connected to the second support plate 414 at a distal end of the first support plate 413 in the extension direction thereof; in other words, a distal end of the first support plate 413 in the extension direction of the first support plate 413 is connected to a distal end of the second support plate 414 in the extension direction of the second support plate. Herein, the distal end of the first support plate 413 refers to the end which is away from the inner plate 411. Likewise, the distal end of the second support plate 414 refers to the end which is away from the outer plate 412. In this way, the first support plate 413 and the second support plate 414 may form a step 410a extending towards the battery cell 3 at the side of the beam structure 400 facing the battery cell 3. That is, in the battery box 100 formed or enclosed by the beam structure 400, the step 410a is formed in the cavity configured to assemble or receive the battery cell 3, and the step 410a (formed by the first support plate 413 and the second support plate 414) is convenient for assembling a crossbeam 7 in the cavity configured to assemble the battery cell 3, such that the structural strength of the battery box 100 is improved. In some embodiments, the crossbeam 7 is lapped on the step 410a. In some embodiments, the crossbeam 7 and the step 410a are fixedly connected to each other, for example, by means of welding or bolting.

In some embodiments, a second cavity II is defined between the first support plate 413 and the second support plate 414. The first cavity I is fluidly connected to or communicates with the second cavity II. This arrangement facilitates the continuous roll forming of the support section 41.

Further, the beam structure 400 further includes a third support plate 415. The third support plate 415 is integrally connected to an end of the outer plate 412 away from the second support plate 414. The inner plate 411 is connected to the third support plate 415. In some embodiments, the third support plate 415 is configured to seal the first cavity I at one end away from the first support plate 413 or the second support plate 414. In some embodiments, the third support plate 415 is integrally formed with the outer plate 412. The third support plate 415 is used as the starting section or the end section of the roll-formed steel plate of the support portion 41, and is welded with the inner plate 411.

In some embodiments, the first support plate 413, the second support plate 414, and the third support plate 415 are parallel to each other.

In some embodiments, the second support plate 414 and the first support plate 413 are integrally connected to each other through a connecting plate 416. In some embodiments, the connecting plate 416 is parallel to the inner plate 411 and the outer plate 412.

In some embodiments, the aforesaid hoisting portion 42 is formed of a steel plate by means of roll forming. The hoisting portion 42 includes a first connecting section 421 and at least two second connecting sections 422. The at least two second connecting sections 422 are connected to each other and are disposed on the same side of the first connecting section 421. The at least two second connecting sections 422 are spaced apart from the first connecting section 421. The at least two second connecting sections 422 cooperatively correspond to the first connecting section 421. The first connecting section 421 may be called as "integral-plate section", and the second connecting section 422 may be called as "split-plate section". In some embodiments, the first connecting section 421 and the second connecting section 422 are extended in a horizontal direction. At least one of the second connecting sections 422 is arranged with a reinforcing rib 425. The reinforcing rib 425 abuts against the first connecting section 421. As shown in FIG. 3, two second connecting sections 422 are taken as an example for illustration. In some embodiments, one of the two second connecting sections 422 is arranged with the reinforcing rib 425. The two second connecting sections 422 are integrally formed with the first connecting section 421, respectively. The two second connecting sections 422 are the beginning section and the end sections of the hoisting portion 42, respectively. The reinforcing rib 425 may be, but not limited to, Z-type, S-type, C-type, etc. The reinforcing rib 425 here may effectively improve the structural strength of the hoisting portion 42. When the hoisting portion 42 is impacted by an external force, the reinforcing rib 425 may absorb the impact energy, and the battery cell 3 in the battery box 100 body is well protected.

In another embodiments, each of two second connecting sections 422 is arranged with a C-type reinforcing rib 425. As shown in FIG. 4, the reinforcing rib 425 arranged on each of two second connecting sections 422 abuts against the first connecting section 421. The reinforcing ribs 425 arranged on the two second connecting sections 422 are connected to each other. In some embodiments, the structural design of the two reinforcing ribs 425 may further improve the structural strength of the hoisting portion 42.

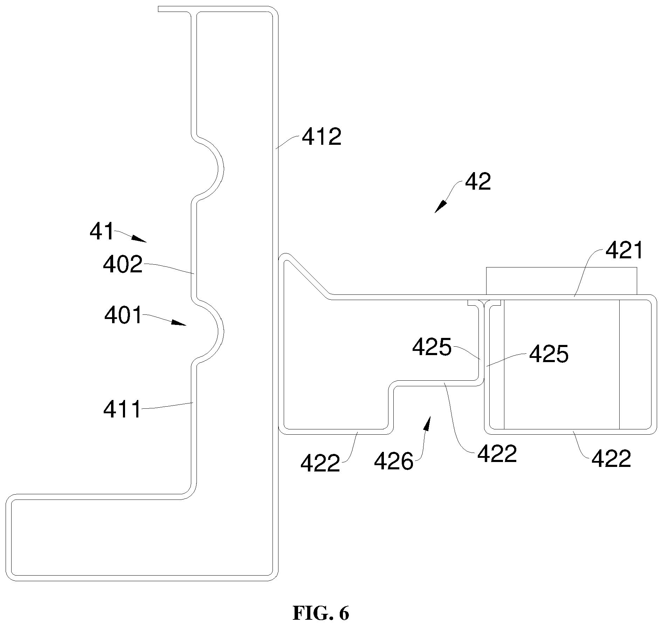

In an additional embodiments, the number of the second connecting sections 42 may also be set as three. As shown in FIG. 6, two of the three second connecting sections 422 close to or adjacent to the outer plate 412 are arranged in a step, such that the hoisting portion 42 forms a groove structure 426. When in use, a reinforcing member (not shown in the drawings) may be mounted in the groove structure 426. The reinforcing member may be a reinforcing beam or a reinforcing block which has a shape matching a shape of the groove structure 426. The reinforcing member is welded with or bonded to an inner wall of the groove structure 426, such that the structural strength of the hoisting portion 42 is improved.

Further, the hoisting portion 42 further includes one or more longitudinal-plate sections 420. The one or more longitudinal-plate sections 420 are integrally connected between the first connecting section 421 and the second connecting section 422. In some embodiments, as shown in FIG. 3, the number of the longitudinal-plate sections 420 may be at least two. The longitudinal-plate sections 420 include a first longitudinal-plate section 424 disposed close to the outer plate 412 and connected to the outer plate 412.. The longitudinal-plate sections includes a second longitudinal-plate section 423 disposed away from the outer plate 412 and is disconnected from the outer plate 412. The first longitudinal-plate section 424 is spaced apart from the second longitudinal-plate section 423. In some embodiments, the first longitudinal-plate section 424 is parallel to the second longitudinal-plate section 423. In some embodiments, the first longitudinal-plate section 424 includes a longitudinal section 4241 and an oblique section 4242 integrally connected to each other. The longitudinal section 4241 is connected to the outer plate 412. The longitudinal section 4241 is connected to the first connecting section 421 and/or the corresponding second connecting section 422 through the oblique section 4242. The oblique section 4242 and the longitudinal section 4241 are arranged at an angle. The angle between the oblique section 4242 and the longitudinal section 4241 is an acute angle. In some embodiments, the longitudinal section 4241 is welded with the outer plate 412. The angle between the oblique section 4242 and the longitudinal section 4241 is a, and 0°<α<90°. In some embodiments, α=45°. This arrangement may effectively disperse the stress applied between the support portion 41 and hoisting portion 42 of the beam structure 400, and thus, the effect of improving strength of the beam structure 400 may be achieved.

In some embodiments, the first connecting section 421 is parallel to the second connecting sections 422. The longitudinal section 4241 is perpendicular to the first connecting section 421.

In some embodiments, as shown in FIG. 3, the oblique section 4242 is located on a side of the hoisting portion 42 where the first connecting section 421 is located. In some embodiments, the oblique section 4242 may also be arranged on a side of the hoisting portion 42 where the second connecting section 422 is located. In other embodiments, the oblique section 4242 may be arranged on both sides of the hoisting portion 42 where the first connecting section 421 and the second connecting section 422 are located, that is, two ends of the longitudinal section 4241 are provided with the oblique sections 4242. In this way, the stress applied to the beam structure 400 may be better dispersed and the strength of the beam structure 400 is ensured.

In some embodiments, an orthographic projection of the longitudinal section 4241 in the length direction of the beam structure 400 is parallel to an orthographic projection of the outer plate 412 in the length direction of the beam structure 400. The longitudinal section 4241 and the outer plate 412 are parallel to each other. In this way, after the longitudinal section 4241 is attached to the outer plate 412, the contact area between the longitudinal section 4241 and the outer plate 412 is large, and the connection strength is high.

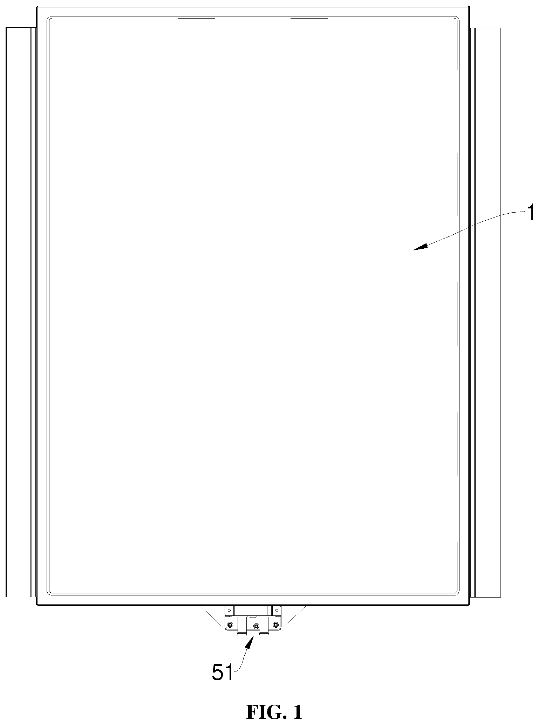

As shown in FIG. 1 and FIG. 2, a battery box 100 is also provided in some embodiments of the present disclosure. The battery box 100 includes the beam structure 400 described above. In some embodiments, the battery box 100 includes a box body 4. The box body 4 is formed by four side beams 4a connected end-to-end. In some embodiments, each of the side beams 4a in the left and right directions includes the support portion 41 and the hoisting portion 42 of the aforementioned beam structure 400. Each of the side beams 4a in the front and rear directions only includes the support portion 41 of the aforesaid beam structure 400. The battery box 100 has a high structural strength and low cost, and may well absorb the expansion and deformation of the battery cell 3.

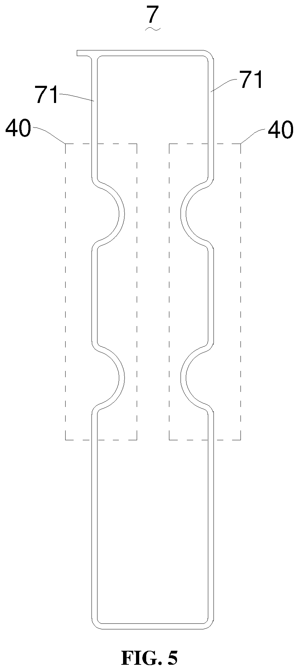

Further, the box body 4 further includes the crossbeam 7. The cross beam 7 is connected to the side beams 4a. In some embodiments, the crossbeam 7 is connected to the step 410a formed by the first support plate 413 and the second support plate 414 described above. It should be noted that the crossbeam 7 is arranged in the middle of the cavity. In some embodiments, the crossbeam 7 is arranged with a corrugated structure 40 at at least one side wall 71 facing the battery cell 3. In some embodiments, as shown in FIG. 5, the crossbeam 7 includes two side walls 71 arranged oppositely to each other. The two side walls 71 are both configured with the aforementioned corrugated structure 40. In this way, when the battery cell 3 is cyclically expanded, the crossbeam 7 may also follow the cyclic expansion of the battery cell 3 through the corrugated structure 40, so as to absorb the cyclic expansion and deformation of the battery cell 3. The crossbeam 7 here is a rolling-formed steel plate.

A cross-sectional shape of each of the one or more corrugated grooves 401 is semicircular, trapezoidal, or triangular.

It should be noted that the corrugated groove 401 is not limited to a round or circular groove. The corrugated groove 401 may also be trapezoidal groove, a triangular groove, etc. When the corrugated groove 401 is the trapezoidal groove or the triangular groove, a filleted corner may be configured at a position where a vertex angle is located, such that the stress concentration may be reduced.

In another embodiments, the corrugated structure 40 may also be a wave-shaped structure.

The battery box 100 further includes a liquid-cooling plate 5 and a bottom guard plate 6 that are successively arranged at a lower side of the box body 4. Water inlet and outlets 51 of the liquid-cooling plate 5 are arranged at an outer side of the box body 4. In this way, the probability that the liquid-cooling plate 5 leaks in the cavity configured to assemble the battery cell 3 may be reduced, and the safety is high.

The battery box 100 further includes a top cover 1 arranged at an upper side of the box body 4.

As shown in FIG. 1 and FIG. 2, a battery pack is further provided in some embodiments of the present disclosure. The battery pack includes the battery cell 3, a busbar assembly 2, and the aforesaid battery box 100. The battery cell 3 is arranged in the battery box 100, and the busbar assembly 2 is arranged at the top of the battery cell 3 and is located at the lower side of the top cover 1. The battery pack is compact and safe.

## Claims

1. A beam structure (400) for a battery box (100), the battery box (100) being configured to receive a battery cell (3), and the beam structure (400) comprising:
an inner plate (411); and
an outer plate (412), arranged oppositely to the inner plate (411);
wherein a first cavity (I) is defined between the inner plate (411) and the outer plate (412), the inner plate (411) is configured to be arranged at a side facing the battery cell (3); and
wherein at least part of the inner plate (411) is configured with a corrugated structure (40).

2. The beam structure (400) as claimed in claim 1, wherein the corrugated structure (40) has one or more corrugated grooves (401), and the one or more corrugated grooves (401) are recessed toward the outer plate (412).

3. The beam structure (400) as claimed in claim 2, wherein the one or more corrugated grooves (401) comprise at least two corrugated grooves (401), and the at least two corrugated grooves (401) are arranged at intervals.

4. The beam structure (400) as claimed in claim 3, wherein a region on the inner plate (411) where each of the at least two corrugated grooves (401) is located is defined as a deformation section (403); and
wherein an interval region between adjacent two of the deformation sections (403) is a compression section (402), and an arc transition is configured between the compression section (402) and each of the deformation sections (403).

5. The beam structure (400) as claimed in claim 3, wherein a distance between adjacent two of the at least two corrugated grooves (401) is defined as H, the maximum width of each of the at least two corrugated grooves (401) is defined D, and 0.4≤D/H≤1.2.

6. The beam structure (400) as claimed in claim 5, wherein D satisfies: 20mm≤D≤60mm.

7. The beam structure (400) as claimed in claim 1, wherein the beam structure (400) further comprises a first support plate (413) and a second support plate (414);
wherein the first support plate (413) is connected to the inner plate (411) and is extended toward a side of the inner plate (411) that is away from the outer plate (412);
the second support plate (414) is connected to the outer plate (412), and an extension direction of the second support plate (414) is the same as that of the first support plate (413); and
wherein an end of the first support plate (413) away from the inner plate (411) is connected to an end of the second support plate (414) away from the outer plate (412).

8. The beam structure (400) as claimed in claim 7, wherein a second cavity (II) is defined between the first support plate (413) and the second support plate (414), and the first cavity (I) is fluidly connected to the second cavity (II).

9. The beam structure (400) as claimed in claim 7, wherein the beam structure (400) further comprises a third support plate (415), the third support plate (415) is integrally connected to an end of the outer plate (412) away from the second support plate (414), and the inner plate (411) is connected to the third support plate (415).

10. The beam structure (400) as claimed in any one of claims 1-9, wherein a hoisting portion (42) is arranged on a side of the outer plate (412) away from the inner plate (411), and the hoisting portion (42) is roll-formed;
the hoisting portion (42) comprises an first connecting section (421) and at least two second connecting sections (422), and the at least two second connecting sections (422) are connected to each other and are on the same side of the first connecting section (421); and
wherein at least one of the at least two second connecting sections (422) is arranged with a reinforcing rib (425), and the reinforcing rib (425) abuts against the first connecting section (421).

11. The beam structure (400) as claimed in claim 10, wherein the hoisting portion (42) further comprises at least two longitudinal-plate sections (420), and the at least two longitudinal-plate sections (420) are integrally connected between the first connecting section (421);
the at least two longitudinal-plate sections (420) comprises a first longitudinal-plate section (424) arranged adjacent to the outer plate (412) and connected to the outer plate (412), and a second longitudinal-plate section (423) away from the outer plate (412);
the first longitudinal-plate section (424) comprises a longitudinal section (4241) and an oblique section (4242) integrally connected to each other, the longitudinal section (4241) is connected to the outer plate (412), and the longitudinal section (4241) is connected to the first connecting section (421) and/or a corresponding one of the at least two second connecting sections (422) through the oblique section (4242); and
wherein the oblique section (4242) is arranged at an angle with the longitudinal section (4241), and the angle between the oblique section (4242) and the longitudinal section (4241) is an acute angle.

12. The beam structure as claimed in any one of claims 1-9, wherein the beam structure is roll-formed; and/or
the corrugated structure (40) is in a wave shape; and/or
a cross-sectional shape of each of the one or more corrugated grooves (401) is semicircular, trapezoidal, or triangular.

13. A battery box (100) configured to receive a battery cell (3), the battery box (100) comprising a box body (4), wherein the box body (4) comprises the beam structure (400) as claimed in any one of claims 1-12.

14. The battery box as claimed in claim 13, wherein a crossbeam (7) is arranged in the box body (4), and at least one side wall of the crossbeam (7) facing the battery cell is arranged with the corrugated structure (40).

15. A battery pack, comprising the battery box (100) as claimed in claim 12 or 13.
